(19) Europäisches Patentamt
European Patent Office
Office européen des brevets

(11) **EP 4 458 159 B1**

(12) **EUROPÄISCHE PATENTSCHRIFT**

(45) Veröffentlichungstag und Bekanntmachung des Hinweises auf die Patenterteilung:
**13.05.2026   Patentblatt 2026/20**

(21) Anmeldenummer: **23171162.3**

(22) Anmeldetag: **02.05.2023**

(51) Internationale Patentklassifikation (IPC):
*A23G 1/18* (2006.01)     *A23G 3/02* (2006.01)
*B21D 26/051* (2011.01)     *B21D 26/059* (2011.01)
*B21D 53/04* (2006.01)     *B23P 15/26* (2006.01)
*B21D 5/14* (2006.01)     *B21D 51/16* (2006.01)
*B21D 51/18* (2006.01)     *A23G 3/04* (2006.01)

(52) Gemeinsame Patentklassifikation (CPC):
**A23G 3/0226; A23G 1/18; A23G 3/04; B21D 5/14; B21D 26/051; B21D 26/059; B21D 51/18; B21D 53/045; B23P 15/26**

(54) **TEMPERIEREINRICHTUNG, VERWENDUNG UND VERFAHREN ZUR HERSTELLUNG EINES TEMPERIERGEHÄUSES**

TEMPERATURE CONTROL DEVICE, USE AND METHOD FOR PRODUCING A TEMPERATURE CONTROL HOUSING

DISPOSITIF  DE CONTRÔLE DE LA TEMPERATURE, UTILISATION ET PROCÉDÉ DE FABRICATION D'UN BOÎTIER DE CONTRÔLE DE LA TEMPERATURE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**06.11.2024   Patentblatt 2024/45**

(73) Patentinhaber: **CHOCOTECH GmbH**
**38855 Wernigerode (DE)**

(72) Erfinder: **Huch, Theobald**
**38302 Wolfenbüttel (DE)**

(74) Vertreter: **REHBERG HÜPPE + PARTNER Patentanwälte PartG mbB Robert-Gernhardt-Platz 1 37073 Göttingen (DE)**

(56) Entgegenhaltungen:
**EP-A1- 3 222 148      WO-A1-99/58920 WO-A2-2009/053496      DE-A1- 102016 122 603 GB-A- 2 031 140**

• **OFFERMANNS HERIBERT: "Gut temperiert", CAV ACHEMA GUIDE 2009, 6 May 2009 (2009-05-06), Leinfelden-Echterdingen, pages 1 - 3, XP093085822, Retrieved from the Internet <URL:https://lob-gmbh.de/wp-content/uploads/ 2020/03/CAV-Achema-Guide2009.pdf> [retrieved on 20230926]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### TECHNISCHES GEBIET DER ERFINDUNG

Die Erfindung betrifft eine Temperiereinrichtung, die Einsatz findet für ein Temperieren einer Masse, welches vorzugsweise kontinuierlich durch die Temperiereinrichtung gefördert und dabei temperiert wird. Die Temperiereinrichtung kann dabei einem Erwärmen der Masse und/oder einem Kühlen der Masse dienen.

Hierbei kann ein Erwärmen der Masse mit einem Temperierfluid erfolgen, bei dem es sich bspw. um Dampf, Thermoöl, Heißwasser oder Hochdruckheißwasser handeln kann. Hingegen kann bei einem Kühlen als Temperierfluid bspw. (Kalt-)Wasser, ein Glykolgemisch oder ein Einsatz eines beliebigen bekannten Kältemittels erfolgen, wobei vorzugsweise keine Direktverdampfung des Kältemittels in der Temperiereinrichtung erfolgt.

Bei der zu temperierenden Masse kann es sich um Lebensmittel, insbesondere eine Süßwarenmasse oder eine Fruchtmasse, handeln, wobei die Masse vorzugsweise bei einer Erwärmung zum Ansetzen oder Anbrennen neigt. Es kann sich auch um eine Masse mit einer hohen Viskosität und somit einem schlechten Fließverhalten handeln. Eine zu erwärmende Masse kann beispielsweise ein proteinhaltiges Produkt (insbesondere ein milchhaltiges Produkt), eine stärkehaltige Masse (insbesondere ein Stärkegel) oder eine im Prozess zum Verdicken neigende Masse, eine Karamellmasse, eine Fruchtmasse (insbesondere fruchthaltige Produkte oder fasrige Produkte oder Faserriegelprodukte), eine Zucker-Glukoselösungsmasse (insbesondere Hartkaramellmasse, Gießbonbonmasse, temperaturempfindliche Massen, wie z. B. Zucker-Glukoselösungsmassen mit einer Kurzzeitkochung auf hoher Temperatur, beispielsweise im Bereich von 145°C-160°C), eine Buttertoffeemasse (insbesondere Massen mit einem hohen Fettanteil und hohen Temperaturen über 160°C) oder eine vegane thermisch empfindliche Masse sein, um lediglich einige den Anwendungsbereich der Erfindung nicht beschränkende Beispiele zu nennen. Gekühlte Massen sind insbesondere temperaturempfindliche Lebensmittel, welche ein schonendes Kühlen erfordern, beispielsweise Karamellmassen, Fondantmassen, Geleemassen oder scherempfindliche Produkte. Möglich ist auch, dass eine Masse aus mehreren unterschiedlichen Teilmassen der zuvor erläuterten Massen besteht und/oder beliebige Zusätze in der Masse angeordnet sind.

Die Temperiereinrichtung dient insbesondere nicht nur der Temperierung, sondern bspw. auch einer Förderung der Masse, einer Formveränderung der Masse, einer Phasenveränderung der Masse (bspw. Kristallieren oder Verdampfen) und/oder einer Durchmischung der Masse, was zeitgleich mit der Temperierung oder zeitlich und räumlich anschließend an die Temperierung in der Temperiereinrichtung erfolgen kann.

Die Temperiereinrichtung kann beispielsweise eine Temperierung eines Dünnfilmes oder eines Fallfilmes vornehmen, wobei die Temperiereinrichtung insbesondere als (Dünn-)Film-Kocher, -Verdampfer oder -Kühler oder als Rotationskocher ausgebildet sein kann. Je nach Anwendungsfall ist eine stehende, liegende oder geneigte Anordnung möglich.

Eine Anwendung der Erfindung kann beispielsweise für Temperiereinrichtungen erfolgen, wie diese derzeit seitens der Anmelderin unter den Kennzeichnungen "SUCROFILM", "SUCROTHERM", "ROTORSTAR" (Marken der Anmelderin) vertrieben werden (vgl. www.chocotech.de).

Des Weiteren betrifft die Erfindung eine neuartige Verwendung sowie ein Verfahren zur Herstellung eines Temperiergehäuses.

### STAND DER TECHNIK

DE 10 2006 043 338 B4 beschreibt ein Verfahren und eine Bearbeitungsstraße für eine Fruchtmasse. Hierbei gelangt eine Fruchtmasse aus einem Vorratsbehälter über eine Pumpe, einen Durchflussmesser, einen Dünnfilmkocher und einen Ausdampfraum zu einer Vakuumschnecke. Von der Vakuumschnecke gelangt die Fruchtmasse wiederum über eine Pumpe, insbesondere unter Zugabe von Farbe und/oder Aromen, zu einer Formstation. Der Dünnfilmkocher weist einen Rotor und einen Stator auf. Die Fruchtmasse durchfließt einen Spalt zwischen Rotor und Stator. Der Rotor ist mit Schabern ausgestattet, die die Masse immer wieder von der Innenfläche des Stators abnehmen und durchmischen. Der Dünnfilmkocher weist einen Mantel auf, der den den Rotor aufnehmenden Innenraum des Stators umgibt. Der Mantel begrenzt einen Temperierraum, durch den Dampf strömt, der kondensiert und Wärme abgibt, mit welcher die Fruchtmasse in dem Dünnfilmkocher erwärmt wird.

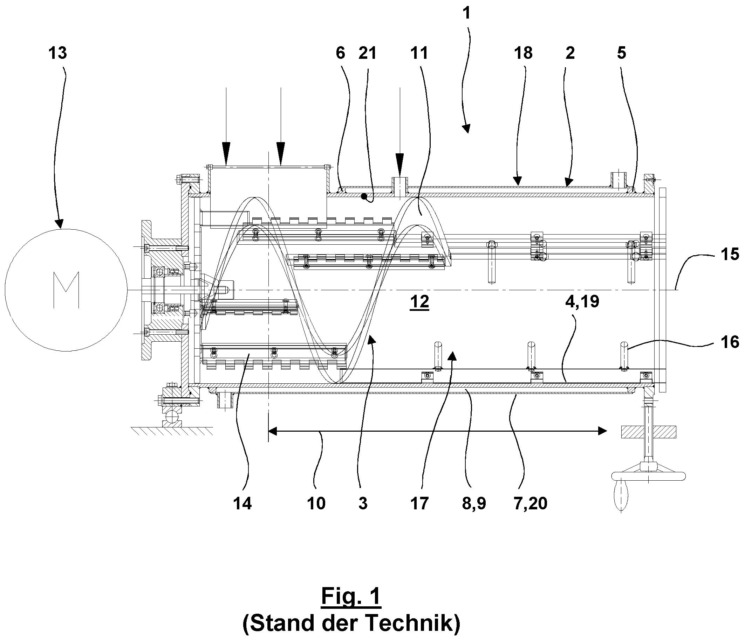

EP 2 111 762 B1 offenbart eine Temperiereinrichtung zur kontinuierlichen Temperierung einer Süßwarenmasse, die beispielsweise bestimmt sein kann zur Herstellung von Halva. Gemäß Fig. 1 weist die Temperiereinrichtung 1 einen Stator 2 und einen Rotor 3 auf. Die zu temperierende und zu bearbeitende (bspw. zu durchmischende oder zu formende) Masse wird in Folge der Drehung des Rotors 3 durch einen Innenraum 17 des Stators 2 gefördert. Der Stator 2 weist ein Temperiergehäuse 18 auf. Das Temperiergehäuse 18 verfügt über ein Innenrohr 4, welches axial voneinander beanstandet angeordnete Ringe 5, 6 trägt, an welchen wiederum ein Außenrohr 7 gehalten ist. Das Innenrohr 4, die Ringe 5, 6 und das Außenrohr 7 sind miteinander verschweißt. Ein hohlzylindrischer Innenraum 8, der radial von dem Innenrohr 4 und dem Außenrohr 7 begrenzt ist, bildet einen von einem Temperierfluid durchströmten Temperierraum 9 aus. Das Innenrohr 4 und das Außenrohr 7 bilden eine Temperier-Innengehäusewand 19 und eine Temperier-Außengehäusewand 20 aus. Der Rotor 3 weist in einem ersten Teil einer Bearbeitungsstrecke 10 eine seelenlose Wendel 11 auf, die im Inneren einen freien Durchgangsraum 12 aufweist. Die Wendel 11 wird von einem Motor 13 angetrieben und bewirkt die Förderung der Masse durch den Innenraum 17. Zwischen Gängen der Wendel 11 sind Ablöselement 14 angeordnet, die hier als Schabekämme bezeichnet sind und sich parallel zur Drehachse 15 des Rotors 3 erstrecken und gegenüber dem Umfang des Innenrohrs 4 des Stators 2 angestellt sind. Die Schabekämme können einen schaberartigen Querschnitt aufweisen oder gezahnt ausgebildet sein. Die Schabekämme dienen dazu, die Masse von dem Innenrohr 4 des Stators 2 abzunehmen, in einer taumelnden Förderbewegung zu halten und miteinander zu vermischen. Auch in einem zweiten Teil der Bearbeitungsstrecke 10 können Ablöseelemente in Form von kammartigen Gebilden vorgesehen sein, die ebenfalls unter Spaltbildung gegenüber dem Innenrohr 4 des Stators 2 angestellt sind und eine Förderwirkung herbeiführen. Zusätzlich können die kammartigen Gebilde als Träger für Ziehdorne 16 dienen, die die Aufgabe haben, immer wieder die Masse zu ergreifen, aufwärts zu ziehen und im oberen Bereich nach unten abzuwerfen. Durch das Ziehen nach oben verringert sich ein Durchmesser von Fäden der Masse, während sich deren Länge vergrößert. Mit dem Abwurf wird die Schwerkraft genutzt, um gebildete Schlaufen wieder zusammenzuführen und eine wollknäuelartige oder filzartige Struktur der Masse zu erzeugen. Die dem Innenraum 17 zugewandte Innenfläche des Außenrohrs 7 bildet eine Arbeitsfläche 21, die mit der Masse zur Temperierung der Masse in Kontakt kommt und mit den Ablöseelementen 14 (die auch von dem Rotor 3 und/oder der Wendel 11 gebildet sein können) derart in Wechselwirkung tritt, dass die Masse von der Arbeitsfläche 21 abgelöst wird. Hinsichtlich weiterer Details einer derartigen Temperiereinrichtung 1 wird auf EP 2 111 762 B1 verwiesen.

Die nicht gattungsgemäße Druckschrift DE 10 2016 122 603 A1 betrifft die Herstellung eines Wärmetauschers aus zwei zylindrisch geformten Platten. Hierbei ist die außenliegende Platte mit einer Wandstärke ausgestattet, die etwa viermal so groß ist wie die Wandstärke der inneren Platte. Die beiden Platten sind an über die gesamte Plattenflächen verteilten Verbindungsstellen miteinander punkt- oder linienförmig verschweißt. Der Zwischenraum zwischen den Platten wird durch Einleitung eines unter Druck stehenden Fluids Innenhochdruck-umgeformt, womit abseits der Verbindungsstellen der Abstand der Platten vergrößert wird. Die Innenfläche der inneren Platte wird infolge des Innenhochdruckumformens gegenüber der ursprünglichen Zylinderform plastisch derart verformt, dass sich zwischen den Verbindungsstellen Ausbeulungen mit lokalen Aufweitungen ergeben. Die Aufweitung mittels des Innenhochdruckumformens kann in zwei Schritten mit dazwischen erfolgender Glühbehandlung der Platten erfolgen, wobei Temperaturen von mehr als 450°C oder sogar mehr als 950°C während der Glühbehandlung wirken können.

Die nicht gattungsgemäße Druckschrift Offermanns Heribert: "Gut temperiert", cav Achema Guide 2009, 6. Mai 2009 (2009-05-06), Seiten 1-3, XP093085822,    Leinfelden-Echterdingen    https://lob-gmbh.de/wp-content/uploads/2020/03/CAV-Achema-Guide2009.pdf (Datum der Einsichtnahme 18.10.2023) beschreibt ein Wärmetauscher-Platten-System (WTP-Temperiersystem), bei dem der Mantel eines Druckbehälters mittels Laser-Punktschweißen mit einem Außenmantel mit einer maximalen Wandstärke von 2 mm verbunden wird. Der Außenmantel wird dann durch Innenhochdruckumformen aufgeweitet, wodurch sich gleichmäßige Hohlräume ergeben sollen, durch die ein gasförmiges oder flüssiges Wärmeträgermedium strömen kann. Das WTP-Temperiersystem soll sich durch eine gute Wärmeübergangscharakteristik auszeichnen, womit eine Reduzierung des Volumenstroms des Wärmeträgermediums, eine verringerte Pumpenleistung und eine Einsparung von Energie erzielt werden sollen. Zwangsführungen des Wärmeträgermediums sollen durch Schweißnähte erfolgen, die eine gleichmäßige Verteilung und hohe Wärmeübergänge gewährleisten sollen. Eine Anwendung eines derartigen WTP-Temperiersystems erfolgt in einem Rührwerksbehälter für eine Chemieanlage.

Die nicht gattungsgemäße Druckschrift WO 99/58920 A1 offenbart eine Herstellung eines hohlzylindrischen Wandungssystems eines Wärmetauschers, bei dem eine ebene erste Stahlplatte auf einer ungefähr dreimal so dicken zweiten Stahlplatte angeordnet wird. Mittels eines Lasers werden die Stahlplatten entlang eines meanderförmigen Musters miteinander verschweißt. Der derart gebildete Plattenverbund wird dann zwischen einer Innenrolle und zwei Außenrollen umgebogen und in eine Zylindersegmentform gerollt. Es erfolgt dann ein Innenhochdruckumformen derart, dass sich infolge des meanderförmigen Musters der Schweißnähte zwischen den Stahlplatten meanderförmige Kanäle ergeben. Das Wandungssystem verfügt über sich lediglich über einen Teilumfang, jeweils aus den zwei Stahlplatten hergestellte Wandungssystemsegmente, die jeweils über einen Zu- und Abfluss für das Wärmeträgermedium verfügen. Neben der Herstellung eines zylindrischen Wärmetauschers kann auch eine Herstellung eines kegelförmigen Wärmetauschers oder einer ebenen Wärmetauscherplatte erfolgen.

EP 3 222 148 A1 offenbart eine Temperiermaschine zum Temperieren einer Lebensmittelmasse, die mittels einer Schnecke durch ein Temperierrohr gefördert wird. Das Temperierrohr weist ein Innenrohr und ein Außenrohr auf, die koaxial zueinander angeordnet sind und zwischen denen eine Temperierkammer gebildet ist. In der Temperierkammer sind wendelförmige Temperierkanäle ausgebildet, die durch sich wendelförmig durch die Temperierkammer erstreckende Rippen oder Wände begrenzt sind.

## AUFGABE DER ERFINDUNG

Der Erfindung liegt die Aufgabe zugrunde, eine Temperiereinrichtung vorzuschlagen, die hinsichtlich

- des Wärmeaustausches mit der Masse und/oder
- der Wechselwirkung des Rotors mit einer Arbeitsfläche und/oder
- der Materialstärken und/oder
- des Herstellungs- und/oder Materialaufwandes und/oder
- der Herstellungskosten und/oder
- der Dauerfestigkeit und/oder
- des Herstellungsverfahrens

verbessert ist. Des Weiteren liegt der Erfindung die Aufgabe zugrunde, ein entsprechend verbessertes Verfahren zur Herstellung eines Temperiergehäuses einer Temperiereinrichtung vorzuschlagen. Schließlich liegt der Erfindung die Aufgabe zugrunde, eine neue Verwendung eines bekannten Herstellungsverfahrens vorzuschlagen.

**LÖSUNG**

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

**BESCHREIBUNG DER ERFINDUNG**

Eine erfindungsgemäße Lösung schlägt eine Temperiereinrichtung vor, die einem kontinuierlichen Temperieren (Kühlen und/oder Erwärmen) einer Masse dient. Die erfindungsgemäße Temperiereinrichtung weist einen Stator und einen gegenüber dem Stator verdrehbaren Rotor auf. In einem Innenraum, der von dem Stator (und unter Umständen auch von dem Rotor) begrenzt ist, ist die Masse angeordnet. Die Masse wird durch eine relative Verdrehung des Rotors gegenüber dem Stator gefördert, geformt und/oder durchmischt. Der Stator bildet ein Temperiergehäuse aus. Das Temperiergehäuse verfügt über eine Temperier-Innengehäusewand und eine Temperier-Außengehäusewand, zwischen denen ein Temperierraum gebildet ist. Der Temperierraum wird von einem Temperierfluid durchströmt. Über das Temperiergehäuse kann ein Austausch von Wärme zwischen der Masse und den Temperierfluid gewährleistet werden, um die Masse zu erwärmen oder abzukühlen.

Für eine im Folgenden als "erste Ausführungsform" bezeichnete Variante kontaktiert die Masse die Temperier-Innengehäusewand, sodass die Masse innerhalb des Temperiergehäuses angeordnet ist. Hingegen kontaktiert die Masse für eine als "zweite Ausführungsform" bezeichnete Variante die Temperier-Außengehäusewand, sodass in diesem Fall die Masse außerhalb des Temperiergehäuses angeordnet ist.

Die Temperiereinrichtung weist eine Arbeitsfläche auf. Die Arbeitsfläche ist für die erste Ausführungsform von einer Innenfläche der Temperier-Innengehäusewand ausgebildet, während die Arbeitsfläche für die zweite Ausführungsform von der Außenfläche der Temperier-Außengehäusewand ausgebildet ist. Die Arbeitsfläche kommt einerseits mit der Masse in Kontakt, um den Wärmeaustausch zur Temperierung der Masse zu gewährleisten. Andererseits bildet die Arbeitsfläche eine Ablösefläche für die Masse aus, da sich an der Arbeitsfläche die Masse infolge der Rotation der Ablöseelemente (die auch von dem Rotor und/oder der Wendel gebildet sein können) ablöst, was vorzugsweise dazu dient, ein dauerhaftes Ansetzen oder ein Anbrennen der Masse an der Arbeitsfläche zu vermeiden. Der Rotor kann Ablöseelemente (insbesondere Schabeelemente) aufweisen, die mit einem mechanischen Kontakt zum Ablösen der Masse entlang der Arbeitsfläche bewegt werden, oder die Ablöseelemente bilden einen Spalt mit einer definierten Konturierung und/oder Spalthöhe mit der Arbeitsfläche aus, womit sich bspw. zwischen der Arbeitsfläche und den Ablöseelementen eine das Ablösen verursachende Scherwirkung in der Masse ergeben kann und/oder eine Umwälzbewegung der Masse oder sogar eine turbulente Strömung der Masse, die die Durchmischung und/oder den Wärmeübergang verbessern kann, herbeigeführt werden kann. Ein Vorteil des Verbleibens eines Spaltes zwischen der Arbeitsfläche und den Ablöseelementen kann sein, dass es zu keinem Verschleiß der Arbeitsfläche und/oder Ablöseelemente kommt, der eine regelmäßige Wartung erfordern kann oder die Lebensdauer beeinträchtigt und/oder der zu einem unerwünschten Eintrag von Verschleißpartikeln in die Masse führen kann.

Die Erfindung schlägt vor, dass die Temperier-Innengehäusewand und die Temperier-Außengehäusewand in aneinander anliegendem Zustand über mehrere Schweißverbindungen miteinander verbunden sind. Hierbei können die Schweißverbindungen in einem gleichmäßigen Muster oder auch ungleichmäßig über die Kontaktfläche zwischen der Temperier-Innengehäusewand und der Temperier-Außengehäusewand verteilt angeordnet sein. Mehrere Schweißverbindungen sind dabei sowohl im Längs- als auch in Quer bzw. Umfangsrichtung der Temperier-Innengehäusewand und der Temperier-Außengehäusewand verteilt angeordnet.

Abweichend zu der aus EP 2 111 762 B2 bekannten Ausführungsform sind somit die Temperier-Innengehäusewand und Temperier-Außengehäusewand nicht lediglich in ihren Endbereichen über Ringe miteinander verbunden, sondern es ergeben sich vielfältige Stütz- oder Verbindungsstellen zwischen diesen. Dies führt zu einer Erhöhung der Steifigkeit des mit der Temperier-Innengehäusewand und der Temperier-Außengehäusewand gebildeten Temperiergehäuses, die unter Umständen auch eine Reduzierung der Wandstärke ermöglicht und unerwünschte plastische Verformungen infolge der Einwirkung der Masse und/oder des Temperierfluides vermeidet oder reduziert.

Während gemäß dem Stand der Technik als Temperier-Gehäusewände Rohre eingesetzt wurden, die durch die Ringe auf Abstand gehalten wurden, um dazwischen den Temperierraum zu bilden, schlägt die Erfindung den Einsatz eines Innenhochdruckumformens zur Herstellung des Temperierraumes vor.

Ein derartiges Innenhochdruckumformen ist bisher lediglich für andere Einrichtungen und Technologiegebiete eingesetzt worden. Ein Innenhochdruckumformen stellt eine Sonderform eines Hydroformens dar, bei dem ein Innenraum eines Hohlkörpers mit einem Fluid druckbeaufschlagt wird und es infolge des Drucks des Fluides zu einer gewünschten plastischen Verformung des Hohlkörpers kommt. Ein Innenhochdruckumformen ist genormt in DIN 8584 und unterfällt dem "Zugdruckumformen".

Durchaus bekannt ist ein Innenhochdruckumformen für eine Herstellung von Thermoblechen, die Einsatz finden können in Wärmetauschern oder Tanks (vgl. Schlussbericht BMBF Verbundprojekt: "Chemische Prozesse-Verbundprojekt: Innovative Apparate- und Anlagenkonzepte zur Steigerung der Effizienz von Produktionsprozessen (InnovA2)", Förderkennzeichen 033RC 1013 A, Berichtszeitraum: 01.01.2011-30.09.2014: Teilprojekte A2 und C4; https://lob-gmbh.de/produkte/; www.omegathermoproducts.nl/de/produkte/lasergeschweisste-tankkomponenten/lasergeschweisster-tankmantel/). Bekannte derartige, durch Innenhochdruckumformen hergestellte Thermobleche kommen in Wärmetauschern oder Tanks lediglich in Kontakt mit Flüssigkeiten, wobei vorteilhaft genutzt werden kann, dass das durch das Innenhochdruckumformen meanderförmig verformte Thermoblech eine vergrößerte Oberfläche und damit einen verbesserten Wärmeaustausch gewährleistet. Der Einsatz derartiger Thermobleche für eine Temperiereinrichtung mit einem mit der Arbeitsfläche in Wechselwirkung tretenden Rotor ist, insbesondere infolge der Anforderungen an die Rundheit der Arbeitsfläche, bisher nicht erfolgt und nicht für möglich gehalten worden.

Erfindungsgemäß wird vorgeschlagen, dass der Temperierraum des Temperiergehäuses durch eine plastische Verformung der Temperier-Innengehäusewand und/oder der Temperier-Außengehäusewand zwischen den Schweißverbindungen mittels Innenhochdruckumformen hergestellt ist. Hierbei wird erfindungsgemäß die Arbeitsfläche für die erste Ausführungsform von der Temperier-Innengehäusewand und für die zweite Ausführungsform von der Temperier-Außengehäusewand bereitgestellt, die bei dem Innenhochdruckumformen mit dem Druck beaufschlagt worden ist.

Erfindungsgemäß wird gewährleistet, dass der Radius der Arbeitsfläche in einem Bereich, in dem die Arbeitsfläche mit dem Rotor in Wechselwirkung tritt (also der Rotor oder Ablöseelemente die definierte Spalthöhe zu den Ablöseelementen ausbildet/ausbilden oder sogar in mechanischen Kontakt mit den Ablöseelementen steht/stehen) um weniger als +/- 1 mm (vorzugsweise um weniger als +/- 0,8 mm oder sogar weniger +/- 0,5 mm) variiert. Diese Vorgabe für die Abweichung der Arbeitsfläche von einer ideal zylindrischen Form hat sich als ausreichend erwiesen, um für mechanisch wirkende Ablöseelemente oder über einen Spalt wirkende Ablöseelemente das Ablösen zu gewährleisten und für einen etwaigen mechanischen Kontakt einen Verschleiß zu vermeiden oder in einem akzeptablen Umfang zu halten.

Möglich ist im Rahmen der Erfindung, dass die Ablöseelemente fest oder federn an dem Rotor gehalten sind, wobei diese im Falle eines mechanischen Kontakts auch eine gewisse federnde Ausgleichsbewegung ausführen können.

Die Temperier-Innengehäusewand und die Temperier-Außengehäusewand können aus beliebigen Halbzeugen wie Platten oder Rohren oder anders geformten Halbzeugen bestehen, die dann mittels Innenhochdruckumformens umgeformt werden. Für einen Vorschlag der Erfindung ist die Temperier-Innengehäusewand als Temperier-Innengehäuseblech ausgebildet. Die Temperier-Außengehäusewand kann dann als Temperier-Außengehäuseblech ausgebildet sein. Die Temperier-Gehäusebleche haben dann eine ebene Form oder werden in diesen verbracht und liegen vollflächig aneinander an, wenn diese mittels der Schweißverbindungen miteinander verschweißt werden. Hieran anschließend werden die Temperier-Gehäusebleche in verschweißten Zustand mittels eines Biegevorgangs oder mittels mehrerer Biegevorgänge mit einer sukzessiven Erhöhung der Krümmung zu einem Zylindersegment gebogen. Möglich ist, dass lediglich ein Zylindersegment erzeugt wird, dessen Umfangswinkel nahezu 360°C beträgt, sodass eine Art geschlitzte Hülse entsteht. Durchaus möglich ist aber auch, dass mehrere Zylindersegmente mit einem kleineren Umfangswinkel hergestellt werden, die dann zur Bildung der Hülse in Umfangrichtung aneinander anschließen.

Gemäß einem weiteren Vorschlag der Erfindung sind aneinander in Umfangsrichtung angrenzende Stirnseiten mindestens eines Zylindersegments über eine Verschweißung miteinander verschweißt. Hierbei kann ein unmittelbares Verschweißen erfolgen, sodass zwischen den Stirnseiten lediglich die Verschweißung angeordnet ist. Möglich ist aber auch, dass zwischen den Stirnseiten ein Verbindungskörper eingeschweißt wird.

Möglich ist, dass eine Nachbearbeitung der Verschweißung der Stirnseiten erfolgt. Die Nachbearbeitung kann beispielsweise eine Egalisierung der Arbeitsfläche, eine Bearbeitung der Schweißnahtwurzel u. ä. sein. Ziel der Nachbearbeitung kann sein, dass die Dicke einerseits des Verbundes aus den Temperier-Gehäuseblechen und andererseits der Verschweißung gleich sind oder nur innerhalb vorgegebener Toleranzen voneinander abweichen und die Rundheit der Innen- und/oder Außenflächen gewährleistet wird. Die Nachbearbeitung kann eine schleifende, fräsende und/oder polierende Nachbearbeitung sein.

Wie eingangs erläutert haben herkömmliche Thermobleche keine Wechselwirkung einer Arbeitsfläche des Thermoblechs mit einem Rotor und Ablöseelementen des Rotors unter definierten Bedingungen ermöglicht. Erfindungsgemäß können definierte Bedingungen zwischen dem Rotor und Ablöseelementen einerseits und der Arbeitsfläche andererseits sowie das eingangs erläuterte geringe Ausmaß der Variation des Radius der Arbeitsfläche vorzugsweise durch zwei (alternativ oder kumulativ einsetzbare) Maßnahmen gewährleistet werden:

Gemäß einer **ersten Maßnahme** erfolgt nach dem Innenhochdruckumformen eine Materialbearbeitung der Arbeitsfläche (also für die erste Ausführungsform der Innenfläche der Temperier-Innengehäusewand oder des Temperier-Innengehäusebleches sowie für die zweite Ausführungsform der Außenfläche der Temperier-Außengehäusewand bzw. des Temperier-Außengehäusebleches). Diese Materialbearbeitung kann bspw. eine spannende, schleifende und/oder biegenden Materialbearbeitung sein. Mittels dieser Materialbearbeitung wird die zuvor infolge des Innenhochdruckumformens unrunde Arbeitsfläche wieder in einen hinreichend runden Zustand versetzt, der die gewünschte Wechselwirkung mit dem Rotor und den Ablöseelementen gewährleistet.

Bei einer derartigen biegenden Materialbearbeitung erfolgt die Herbeiführung des gewünschten Ausmaßes der Rundheit durch ein zumindest teilweise Rückbiegen der Arbeitsfläche und damit der zugeordneten Temperier-Gehäusewand bzw. des zugeordneten Temperier-Gehäusebleches.

Hingegen erfolgt für eine spannende und/oder schleifende Materialbearbeitung eine Beseitigung von Materialbereichen der Arbeitsfläche, im Bereich welcher infolge des Innenhochdruckumformens eine plastische Verformung in Richtung des die Masse beinhaltenden Innenraums erfolgt ist.

Um dies anhand eines vereinfachenden, stark schematisierten Beispiel für die erste Ausführungsform zu erläutern, kann nach dem Innenhochdruckumformen die Arbeitsfläche grundsätzlich einen Radius R aufweisen mit einer Abweichung a gegenüber der ideal zylindrischen Form, welche bei vereinfachender Annahme einer Abweichung in Umfangsrichtung entsprechend einer trigonometrischen Funktion beschrieben werden kann mit $a = A \cdot \sin(n \cdot \alpha)$, wobei n eine beliebige natürliche Zahl sein kann und mit der Zahl der Schweißverbindungen korrelieren kann, $\alpha$ den Umfangswinkel im Bogenmaß bezeichnet und A die Amplitude der Abweichung von der ideal zylindrischen Form infolge des Innenhochdruckumformens bezeichnet. Der tatsächliche Radius $R_{IST}$ nach dem Innenhochdruckumformen ergibt sich als Funktion des Umfangswinkels dann über

$$R_{IST} = R + A \cdot \sin(n \cdot \alpha).$$

Für dieses vereinfachte und schematische Beispiel kann mit der fräsenden oder schleifenden Nachbearbeitung im Idealfall eine ideal zylindrische Arbeitsfläche mit dem Radius $R_{ideal, \text{ nach Materialbearbeitung}}$ erzeugt werden, wobei dann

$$R_{ideal, \text{ nach Materialbearbeitung}} = R + A$$

gilt. Möglich ist auch, dass ein Materialabtrag in einem kleineren Ausmaß

$$R - A > R_{ideal, \text{ nach Materialbearbeitung}} > R + A$$

erfolgt, wenn eine gewisse verbleibende Unrundheit akzeptabel ist. Die vorstehenden Ausführungen sind entsprechend auch für das zweite Ausführungsbeispiel übertragbar. Die Materialbearbeitung kann dazu führen, dass die die Arbeitsfläche bereitstellende Temperier-Gehäusewand bzw. das die Arbeitsfläche bereitstellende Temperier-Gehäuseblech nach der Materialbearbeitung infolge des Materialabtrages eine in Umfangsrichtung variierende Dicke aufweist.

Für eine **zweite Maßnahme** erfolgt die Wahl der Dicken und Materialien, insbesondere der Steifigkeiten und Festigkeiten, der Temperier-Gehäusebleche derart, dass für die erste Ausführungsform, bei der das Temperier-Innengehäuseblech die Arbeitsfläche bildet, das Temperier-Innengehäuseblech infolge des Innenhochdruckumformens nicht plastisch verformt wird. Ist somit vor dem Innenhochdruckumformen bereits die Arbeitsfläche mit einer hinreichenden Rundheit hergestellt worden, wird diese Rundheit durch das Innenhochdruckumformen nicht beeinträchtigt. Sofern eine gewisse Unrundheit hingenommen werden kann, kann auch infolge des Innenhochdruckumformens eine plastische Verformung des Temperier-Innengehäusebleches in einem kleineren Ausmaß erfolgen als des für das Temperier-Außengehäuseblech der Fall ist. Dies kann gewährleistet werden, indem für das Temperier-Innengehäuseblech ein Material mit einer höheren Steifigkeit oder Streckgrenze gewählt wird als für das Temperier-Außengehäuseblech. Alternativ oder kumulativ kann die Dicke des Temperier-Innengehäusebleches größer sein als die Dicke des Temperier-Außengehäusebleches.

Das Entsprechende gilt für den Fall, dass das Temperier-Außengehäuseblech die Arbeitsfläche bildet.

Für eine besondere Ausführungsform der Erfindung können die beiden Temperier-Gehäusebleche aus denselben Materialien bestehen. In diesem Fall kann das die Arbeitsfläche ausbildende Temperier-Gehäuseblech eine Dicke von mindestens 2,5 mm (insbesondere mindestens 3,0 mm, mindestens 3,5 mm, mindestens 4,0 mm oder mindestens 4,5 mm) aufweisen, während dann das andere Temperier-Gehäuseblech eine Dicke von weniger als 2 mm (vorzugsweise weniger als 1,5 mm oder weniger als 1,0 mm) aufweisen kann. Vorzugsweise ist die Dicke des Temperier-Gehäusebleches, welches die Arbeitsfläche ausbildet, um einen Faktor von mindestens 1,5 oder 2,0 (insbesondere um einen Faktor von mindestens 2,5, mindestens 3,0, mindestens 3,5 oder sogar mindestens 4,0) größer als die Dicke des anderen Temperier-Gehäusebleches.

Zur Gewährleistung der erforderlichen Rundheit der Arbeitsfläche kann auch eine Kombination der beiden zuvor erläuterten Maßnahmen erfolgen.

Die Schweißverbindungen, über die an mehreren Stützstellen die Verbindung der Temperier-Gehäusewände erfolgt, können beliebig ausgebildet sein. So können die Schweißverbindungen beispielsweise Schweißpunkte oder gradlinige oder beliebig gekrümmte Schweißlinien sein. Vorzugsweise finden Schweißverbindungen Einsatz, die als Schweißringe ausgebildet sind. Derartige Schweißringe ermöglichen eine Verbindung der Temperier-Gehäusewände über den gesamten Umfang des Schweißrings, womit eine zuverlässige Verbindung, auch bei etwaigen hohen Drücken bei dem Innenhochdruckumformverfahren, gewährleistet ist. Über den Radius und damit die Umfangslänge des Schweißrings kann eine Vorgabe der Festigkeit der Verbindung erfolgen. Möglich ist auch, dass mittels eines Lasers mehrere konzentrische Schweißringe hergestellt werden, die unmittelbar benachbart zueinander angeordnet sein können, oder eine Art Schweißspirale hergestellt wird.

Durch die Wahl der Orte und Form der Schweißverbindungen können auch Strömungskanäle des Temperierraumes vorgegeben werden, über die auch eine Steuerung des Wärmeeintrags in die Masse erfolgen kann. Mittels Linien-Schweißverbindungen können auch mehrere Temperierkanäle in dem Temperierraum geschaffen werden, die dann mit gleichen oder unterschiedlichen Temperierfluiden und/oder unterschiedlichen Temperaturen beaufschlagt werden können. Mit einer Vergrößerung des Abstandes von Schweißverbindungen werden stärkere plastische Verformungen des mindestens einen Temperier-Gehäusebleches zwischen den Schweißverbindungen ermöglicht.

Möglich ist, dass der infolge der Verschweißungen hergestellte Verbund der Temperier-Gehäusewände eine hinreichende Eigensteifigkeit aufweist. Diese kann bereits durch das Innenhochdruckumformen und die dabei herbeigeführten plastischen Verformungen, die zu einer Erhöhung des Flächenträgheitsmomentes des Verbundes führen, gewährleistet werden. Über beliebige geeignete Stützstrukturen kann die Form des Verbundes und damit auch das angestrebte Maß der Rundheit der Arbeitsfläche gewährleistet und aufrechterhalten werden. Hierbei können innere oder äußere Stützstrukturen Einsatz finden. Für einen Vorschlag der Erfindung ist (alternativ oder kumulativ) mindestens eine axiale Stirnseite der Temperier-Gehäusewände mit einem Flansch verschweißt, bei dem es sich auch um einen Ringflansch handeln kann. Der Flansch kann zu einer Versteifung des Temperiergehäuses führen und die Rundheit der Arbeitsfläche gewährleisten. Vorzugsweise sind beide Stirnseiten jeweils mit einem Flansch verschweißt.

Eine weitere Lösung der der Erfindung zugrunde liegenden Aufgabe stellt die Verwendung eines Innenhochdruckumformens für ein neues Technologiegebiet, nämlich für die Herstellung eines Temperierraumes eines Temperiergehäuses für eine Temperiereinrichtung für ein kontinuierliches Temperieren einer Masse dar. Hierbei weist die Temperiereinrichtung einen Stator und einen gegenüber dem Stator verdrehten Rotor auf. In dem von dem Stator begrenzten Innenraum ist die Masse angeordnet. Durch eine relative Verdrehung des Rotors gegenüber dem Stator kann die Masse gefördert, geformt und/oder durchmischt werden. Das Temperiergehäuse ist dabei von dem Stator ausgebildet. Das Temperiergehäuse weist eine Temperier-Innengehäusewand und eine Temperier-Außengehäusewand auf. Zwischen den Temperier-Gehäusewänden ist der von einem Temperierfluid durchströmte Temperierraum ausgebildet. Erfindungsgemäß handelt es sich bei der Temperiereinrichtung um eine Temperiereinrichtung, wie diese zuvor beschrieben worden ist.

Eine weitere Lösung der der Erfindung zugrunde liegenden Aufgabe stellt ein Verfahren zur Herstellung eines Temperiergehäuses dar, wobei das Temperiergehäuse bestimmt ist für eine Temperiereinrichtung der zuvor erläuterten Art. In dem erfindungsgemäßen Verfahren erfolgt zunächst eine Bereitstellung eines Temperier-Innengehäusebleches und eines Temperier-Außengehäusebleches, was durch Zuschneiden derselben erfolgen kann. In einem anschließenden Verfahrensschritt erfolgt dann ein Verschweißen der Temperier-Gehäusebleche mittels Schweißverbindungen miteinander. Auf diese Weise ist eine Temperiergehäuseplatte gebildet. Vorzugsweise liegen bei der Herstellung der Schweißverbindungen die Temperier-Gehäusebleche eben und flächig aneinander an. In einem anschließenden Verfahrensschritt erfolgt dann ein Biegen der Temperiergehäuseplatte, insbesondere zu einem Zylindersegment, wie dieses zuvor erläutert worden ist. Es erfolgt dann eine Erzeugung einer Verschweißung der aneinander angrenzenden Stirnseiten der gebogenen Temperiergehäuseplatte. Eine Herstellung des zwischen den Temperier-Gehäuseblechen ausgebildeten Temperierraums erfolgt durch eine plastische Verformung mittels Innenhochdruckumformens.

Bei einer Ausführungsform des erfindungsgemäßen Verfahrens erfolgt das Bereitstellen der Temperier-Gehäusebleche unter Einsatz eines Zuschneidens mittels eines Lasers in die gewünschte Geometrie.

Möglich ist, dass in dem erfindungsgemäßen Verfahren ein Biegen in einer Biegestufe oder mehreren sukzessiven Biegestufen zu einem Zylindersegment mittels einer 4-Walzen-Biegemaschine erfolgt. Der Erfindung zugrunde liegende Untersuchungen haben auf das Ergebnis geführt, dass das Biegen mittels einer 4-Walzen-Biegemaschine vorteilhaft ist insbesondere zur Herbeiführung der erforderlichen Krümmungen der Temperier-Gehäusebleche auch im Umgebungsbereich der Stirnseiten, die über die Schweißnaht miteinander verbunden werden.

In einem erfindungsgemäßen Verfahren erfolgt eine Nachbearbeitung der Verschweißung, wie diese bereits zuvor erläutert worden ist.

Möglich ist im Rahmen der Erfindung auch, dass in einem Verfahrensschritt eine axiale Stirnseite des Temperier-Außengehäusebleches und/oder eine axiale Stirnseite des Temperier-Innengehäusebleches mit einem Flansch verschweißt wird, was zur Stabilisierung der Temperier-Gehäusebleche und zur Aufrechterhaltung der Rundheit dienen kann.

Möglich ist auch, dass bei dem erfindungsgemäßen Verfahren ein Spannungsarmglühen erfolgt.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1     zeigt einen Längsschnitt durch eine Temperiereinrichtung gemäß dem Stand der Technik (EP 2 111 762 B1).

Fig. 2 bis 15     zeigen schematisch in unterschiedlichen Verfahrensschritten eine Herstellung eines Temperiergehäuses einer Temperiereinrichtung für die erste Ausführungsform.

Fig. 16 und 17     zeigen Verfahrensschritte, welche bei der Herstellung eines Temperiergehäuses einer Temperiereinrichtung für die zweite Ausführungsform Einsatz finden können.

## FIGURENBESCHREIBUNG

In der folgenden Beschreibung wird teilweise für Bauelemente und Merkmale, die sich entsprechen oder ähneln, dieselbe Bezugszahl verwendet, wobei dann die unterschiedlichen Bauelemente oder Merkmale durch den zusätzlichen Buchstaben a, b, ... voneinander unterschieden sind. Auf diese Bauelemente oder Merkmale kann dann mit der Bezugszahl mit oder ohne den zusätzlichen Buchstaben Bezug genommen sein. Wird die Bezugszahl ohne zusätzlichen Buchstaben verwendet, kann dies ein derartiges Bauelement oder Merkmal, mehrere derartige Bauelemente oder Merkmale oder sämtliche derartige Bauelemente oder Merkmale betreffen.

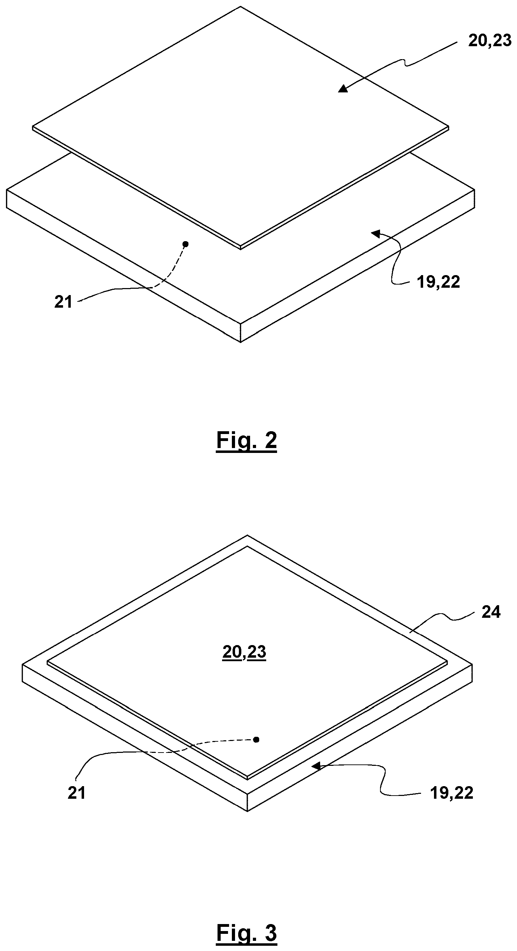

Gemäß **Fig. 2** erfolgt zunächst eine Bereitstellung einer Temperier-Innengehäusewand 19 in Form eines Temperier-Innengehäusebleches 22 und einer Temperier-Außengehäusewand 20 in Form eines Temperier-Außengehäusebleches 23, indem diese aus einem Halbzeug (beispielsweise mittels eines Lasers) zugeschnitten werden. Für das in den **Fig. 2 bis 15** dargestellte Ausführungsbeispiel sind die Temperier-Gehäusebleche 22, 23 bestimmt für die erste Ausführungsform der Temperiereinrichtung 1, bei der die Arbeitsfläche 21 eine Innenfläche des Temperiergehäuses 18 bildet.

Sind die Temperier-Gehäusebleche 22, 23 aus denselben Materialien hergestellt, ist die Dicke des Temperier-Innengehäusebleches 22 mindestens um einen Faktor 2,0 (vorzugsweise mindestens 2,5; mindestens 3,0; mindestens 3,5 oder mindestens 4,0) größer als die Dicke des Temperier-Außengehäusebleches 23. Beispielsweise beträgt die Dicke des Temperier-Innengehäusebleches 22 mindestens 4,5 mm, während die Dicke des Temperier-Außengehäusebleches 23 weniger als 2 mm beträgt.

Gemäß **Fig. 3** werden die Temperier-Gehäusebleche 22, 23 in ebenem Zustand vollflächig aufeinander aufgelegt, wobei diese eine vorbestimmte Relativlage einnehmen mit weitestgehender Überdeckung. Möglich ist, dass lediglich ein schmaler, nicht überlappender Rand 24 verbleibt.

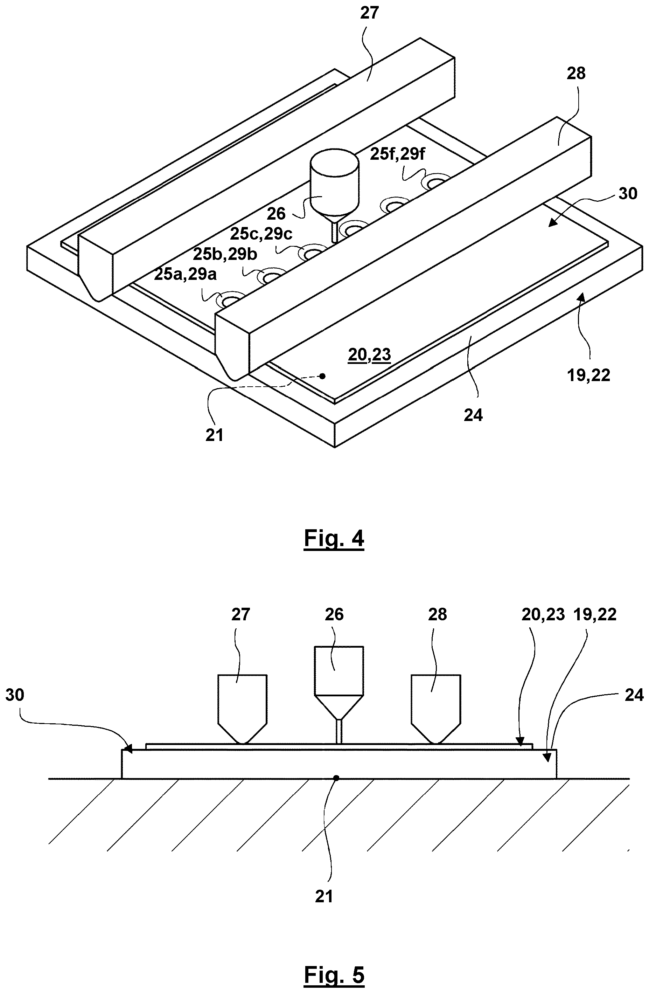

**Fig. 4** zeigt die Erstellung von Schweißverbindungen 25, über die die Temperier-Gehäusebleche 22, 23 miteinander verschweißt werden, in einer räumlichen Ansicht. **Fig. 5** zeigt eine entsprechende Vorderansicht bzw. Schnittdarstellung. Die Herstellung der Schweißverbindungen 25 erfolgt mittels eines Lasers 26. Während des Herstellens der Schweißverbindungen 25 erfolgt ein Anpressen der Temperier-Gehäusebleche 22, 23 mittels beidseits des Laser 26 angeordneten Spannbalken 27, 28, um ein möglichst spaltfreies Verschweißen zu ermöglichen. Für das dargestellte Ausführungsbeispiel handelt es sich bei den Schweißverbindungen 25 um Schweißringe 29. In Fig. 4 ist zu erkennen, dass eine Reihe von Schweißringen 29 hergestellt wird.

Die äußeren Ränder des Temperier-Außengehäusebleches 23 werden verschweißt mit dem Temperier-Innengehäuseblech 22, womit eine Abdichtung der Kontaktfläche zwischen den Temperier-Gehäuseblechen 22, 23 nach außen gewährleistet wird.

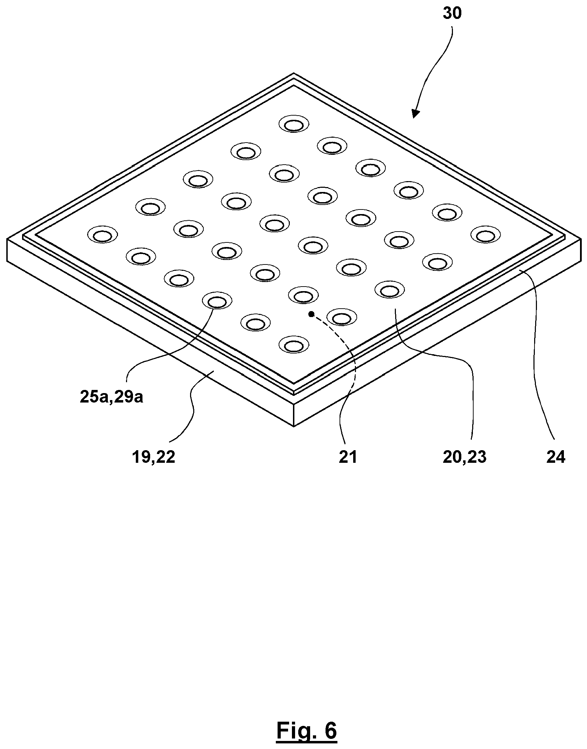

Wie in **Fig. 6** zu erkennen ist, kann anschließend ein Versetzen des Lasers 26 und der Spannbalken 27, 28 quer zu der Reihe erfolgen, um mehrere parallele Reihen der Schweißverbindungen 25 zu erstellen. Für das in Fig. 6 dargestellte Ausführungsbeispiel sind die Schweißverbindungen 25 der unterschiedlichen Reihen an den Ecken eines Quadrat-Rastes angeordnet. Möglich ist durchaus, dass die Schweißverbindungen 25 der einzelnen Reihen versetzt angeordnet sind, womit vier benachbarte Schweißverbindungen 25 eine Raute ausbilden können. Beliebige andere Muster und Verteilungen der Schweißverbindungen 25 sind ebenfalls möglich, wobei auch die Schweißverbindungen 25 unterschiedliche Formen aufweisen können.

Die über die Schweißverbindungen 25 miteinander verbundenen Temperier-Gehäusebleche 22, 23 bilden eine Temperiergehäuseplatte 30.

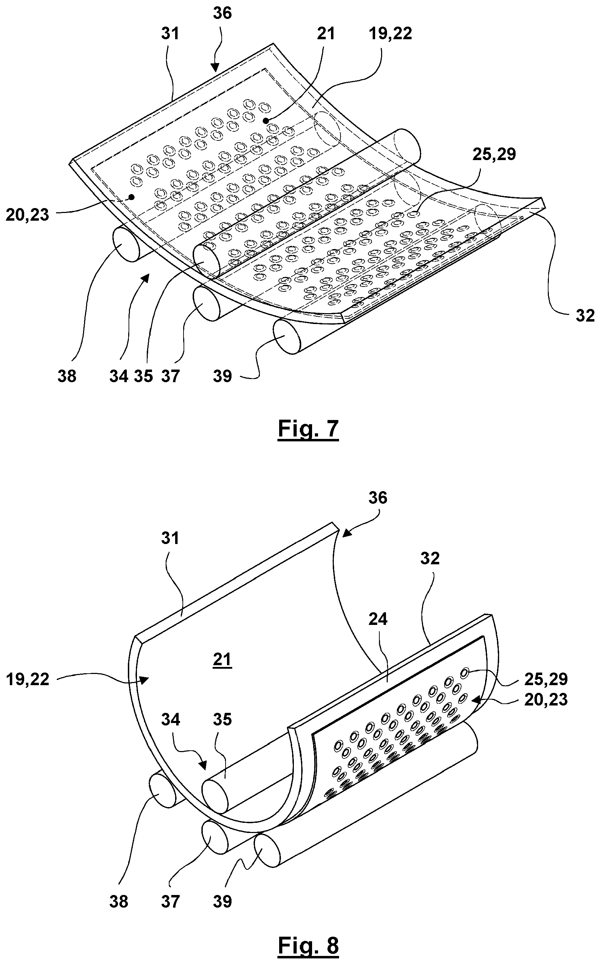

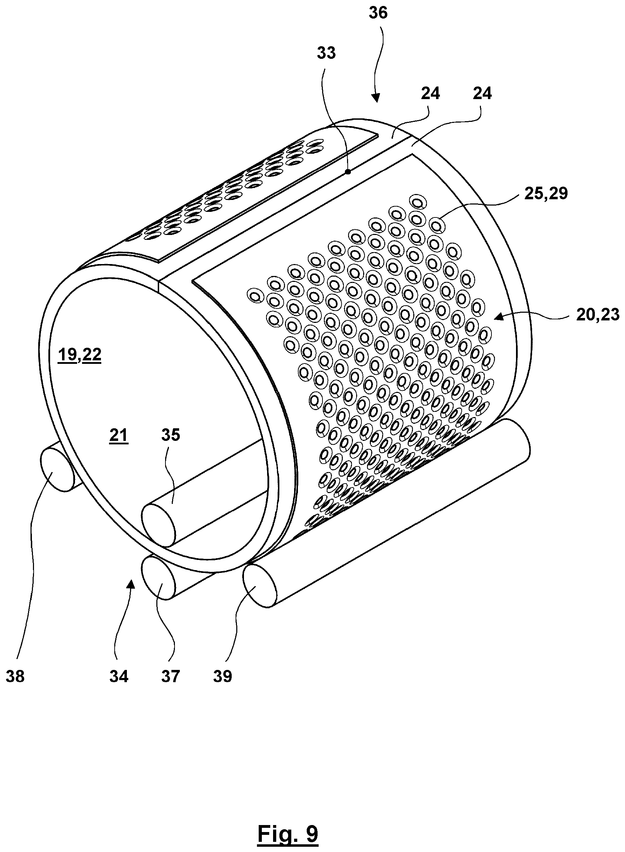

Gemäß **Fig. 7 bis 9** erfolgt ein sukzessives oder kontinuierliches Biegen der Temperiergehäuseplatte 30, sodass ein (Hohl-)Zylindersegment 36 mit sich vergrößerndem Umfangswinkel und verkleinerndem Radius entsteht, bis eine geschlitzte Hülse gemäß Fig. 9 hergestellt ist, bei der die in Umfangsrichtung orientierten Stirnseiten 31, 32 der Temperiergehäuseplatte 30 unmittelbar aneinander anliegen oder lediglich durch einen Schlitz 33 voneinander getrennt sind. Für das Biegen findet eine 4-Walzen-Biegemaschine 34 Einsatz, bei der eine Walze 35 im Inneren des Zylindersegments 36 auf die Arbeitsfläche 21 des Temperier-Innengehäuseblechs 22 einwirkt. In demselben Umfangsbereich wirkt außenliegend eine Walze 37 auf das Temperier-Außengehäuseblech 23 ein, sodass in diesem Umfangsbereich die Temperiergehäuseplatte 30 zwischen den Walzen 35, 37 verspannt ist. Weitere Walzen 38, 39 wirken dann im Umfangsrichtung vor und hinter der Walze auf das Temperier-Außengehäuseblech 23 ein. Durch den Versatz der Walze 35 gegenüber den Walzen 38, 39 erfolgt die Erhöhung der Biegung der Temperiergehäuseplatte 30.

Der Umfangswinkel des Zylindersegments 36 beträgt in Fig. 9 360° oder (entsprechend der Breite des Schlitzes 33) geringfügig weniger 360°.

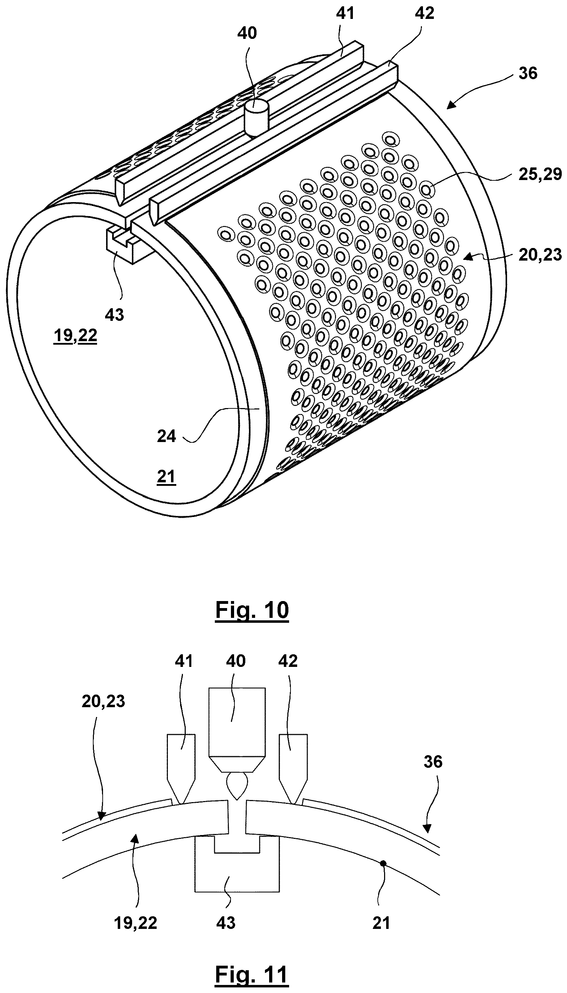

**Fig. 10** zeigt ein Verschweißen der Stirnseiten 31, 32 in einer räumlichen Darstellung, während **Fig. 11** eine Vorderansicht oder Schnittdarstellung während des Verschweißens zeigt. Mittels eines Lasers 40, Elektroden, Abstützelemente oder Führungselementen 41, 42 und einem im Bereich des Schlitzes 33 auf beiden Seiten des Schlitzes 33 an die Arbeitsfläche 21 angepressten Form- und/oder Abstützelement 43 erfolgt eine Herstellung einer Verschweißung 44, über die die Stirnseiten 31, 32 miteinander verschweißt sind. Hierbei kann die Verschweißung 44 aus dem Material des Temperier-Innengehäusebleches 22 bestehen und/oder hierfür kann ein zusätzliches Schweißmaterial eingesetzt sein.

Hieran anschließend kann eine Nachbearbeitung der Verschweißung 44, insbesondere durch Fräsen, Schleifen oder Polieren derart erfolgen, dass die Verschweißung 44 bündig übergeht zu den Stirnseiten 31, 32 des Temperier-Innengehäuseblechs 22 und sich eine möglichst zylindrische Arbeitsfläche 21 auch im Bereich der Verschweißung 44 ergibt.

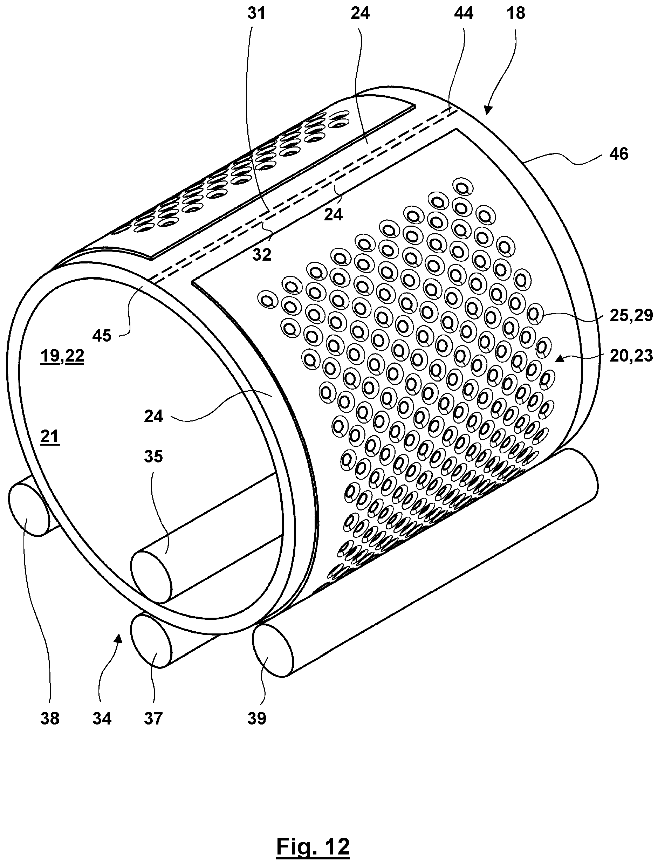

Gemäß **Fig. 12** erfolgt dann nochmals ein Biegen mittels der 4-Walzen-Biegemaschine 34, womit insbesondere ein Ausgleich etwaiger Verformungen oder eines Verzugs infolge einerseits der Herstellung der Schweißverbindungen 25 und andererseits infolge der Herstellung der Verschweißung 44 erfolgen kann und möglichst eine zylindrische Form der Arbeitsfläche 21 herbeigeführt wird.

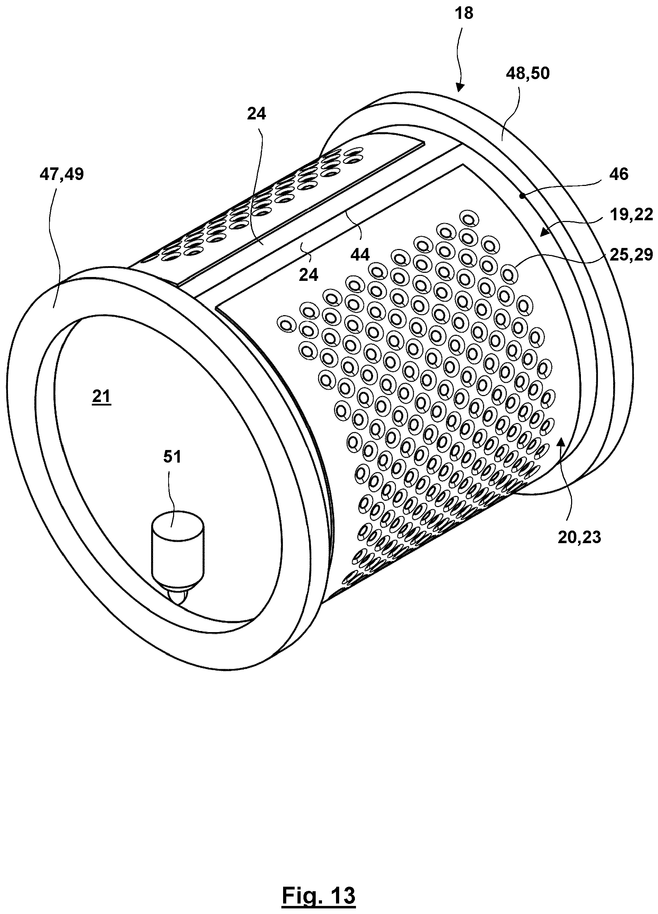

In dem nächsten, in **Fig. 13** dargestellten Verfahrensschritt werden axiale Stirnseiten 45, 46 des Temperier-Innengehäuseblechs 22 mit Flanschen 47, 48 verschweißt, die hier als Ringflansche 49, 50 ausgebildet sind. Auch dies erfolgt unter Einsatz eines Laser 51. Auf diese Weise ist ein Temperiergehäuse 18 gebildet. Allerdings verfügt das Temperiergehäuse 18 in diesem Zustand noch über keinen Temperierraum 9, da die Temperier-Gehäusebleche 22, 23 noch vollflächig einander anliegen.

Im Folgenden wird über eine hier nicht dargestellte Zufuhröffnung und -leitung oder einen Anschluss der Zwischenraum der Temperier-Gehäusebleche 22, 23, der nach außen durch Verschweißung des Randes des Temperier-Innengehäusebleches 22 mit dem Temperier-Außengehäuseblech 23 abgedichtet ist, mit einem Fluid beaufschlagt, womit das Innenhochdruckumformen herbeigeführt wird und eine plastische Verformung der Temperier-Gehäusebleche 22, 23, vorzugsweise ausschließlich des Temperier-Außengehäusebleches 23 erfolgt.

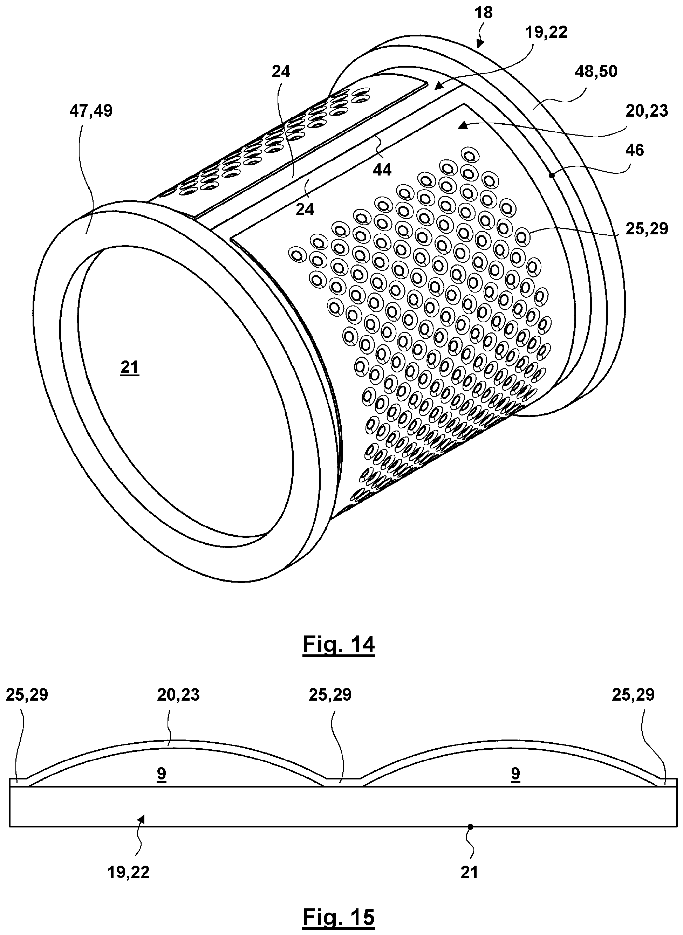

Den Endzustand nach dem Innenhochdruckumformen zeigen die **Fig. 14 und 15.** Hierbei stellt Fig. 14 eine räumliche Ansicht dar, bei der allerdings die Verformungen des Temperier-Außengehäusebleches 23 angesichts der beschränkten zeichnerischen Möglichkeiten nicht zu erkennen sind. Fig. 15 zeigt einen Längs-Teilschnitt oder einen Teil-Umfangsschnitt in einer Abwicklung im Bereich von drei benachbarten Schweißverbindungen 25. Zu erkennen ist, dass für das hier dargestellte erste Ausführungsbeispiel keine Verformung des die Arbeitsfläche 21 bildenden Temperier-Innengehäusebleches 22 erfolgt, während das Temperier-Außengehäuseblech 23 plastisch verformt ist, womit der Temperierraum 8 bereitgestellt ist, durch den das Temperierfluid strömen kann.

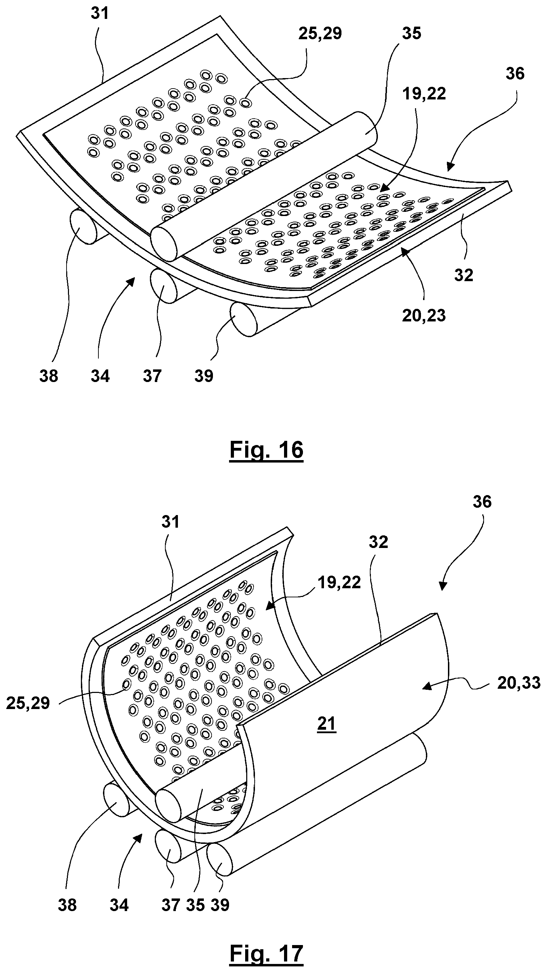

Für die zweite Ausführungsform kann die Masse in einem Innenraum der Temperiereinrichtung 1 angeordnet sein, der radial innen begrenzt ist durch das Temperiergehäuse 18 und innerhalb dessen sich dann ein Rotor um die Längsachse bewegt. Für die zweite Ausführungsform bildet das Temperiergehäuse 18 dann die innere Begrenzung des die Masse aufnehmenden Innenraums. In diesem Fall erfolgt grundsätzlich eine entsprechende Herstellung des Temperiergehäuses, wie diese in den Fig. 2 bis 15 dargestellt ist. Allerdings erfolgt dann eine Biegung der Temperiergehäuseplatte 30 mit einer 4-Walzen-Biegemaschine 34 in entgegengesetzte Richtung, wie dieses schematisch in den **Fig. 16 und 17** dargestellt ist. In diesem Fall bildet die Außenseite des Temperier-Außengehäuseblechs 23 die Arbeitsfläche 21 aus.

Bis auf das Temperiergehäuse 18 kann grundsätzlich der Temperiereinrichtung 1 entsprechend der in Fig. 1 dargestellten und in EP 2 111 762 B1 beschriebenen Temperiereinrichtung oder gemäß den anderen eingangs genannten Temperiereinrichtungen des Standes der Technik ausgebildet sein, ohne dass hierdurch der durch die Erfindung vorgegebene Rahmen verlassen wird.

Die Temperiereinrichtung 1 kann gemäß Fig. 1 eine horizontale Ausrichtung und Rotationsachse des Rotors 3 aufweisen oder unter einem beliebigen Winkel geneigt sein oder vertikal orientiert sein.

Möglich ist, dass in der Temperiereinrichtung 1 die Arbeitsfläche 21 des Temperiergehäuses 18 abweichend zu den dargestellten und beschriebenen Ausführungsformen nicht zylindrisch ausgebildet ist, sondern konisch ausgebildet ist.

Vorzugsweise sind die Temperier-Gehäusebleche 22, 23 aus Edelstahl hergestellt, wobei vorzugsweise ein Werkstoff 1.4404 oder 1.4571 eingesetzt ist. Ein beliebiger anderer Werkstoff kann ebenfalls eingesetzt werden, wobei auch möglich ist, dass die Temperier-Gehäusebleche 22, 23 aus unterschiedlichen Werkstoffen hergestellt sind, wobei vorzugsweise das die Arbeitsfläche 21 bereitstellende Temperier-Gehäuseblech aus einem festeren Werkstoff mit einer höheren Streckgrenze hergestellt ist.

Eine Beaufschlagung des Temperierraumes 9 des Temperiergehäuses 18 mit dem Temperierfluid erfolgt unter einem Druck, der beispielsweise mehr als 5 bar, mehr als 7 bar, mehr als 8 bar oder sogar mehr als 9 bar betragen kann.

Erfindungsgemäß kann der Rohmaterialeinsatz verringert werden, womit es zu einer Ressourcen-Schonung kommen kann. Es ergeben sich u. U. geringere Fertigungskosten, geringere Betriebskosten und/oder geringere Zertifizierungskosten.

Das erfindungsgemäße Temperiergehäuse 18 gewährleistet eine hohe Festigung und Maßgenauigkeit, da thermische Einflüsse durch die Schweißoperationen durch die wiederholte Biegung mit der 4-Walzen-Biegemaschine 14 minimiert sind. Es können geringere Dicken der Temperier-Gehäusebleche 22, 23 erzielt werden, womit auch ein effektiverer Wärmedurchgang herbeigeführt werden kann.

Die Ablöseelemente 14 können über die gesamte Bearbeitungsstrecke 10 lediglich über Teilabschnitte der Bearbeitungsstrecke 10 an dem Rotor 3 vorgesehen sein oder Unterbrechungen aufweisen. Die Ablöseelemente 14 können auch eine Wendelform aufweisen, um die Förderbewegung der Masse zu unterstützen, oder können von der Wendel 11 oder dem Rotor 3 selbst ausgebildet sein. Die Ablöseelemente 14 können in den Rotor 3 fest integriert sein oder austauschbar sein. Die Ablöseelemente 14 können starr an dem Rotor 3 gehalten sein oder federnd abgestützt sein.

Die gemäß dem Stand der Technik eingesetzten Rohre zur Bildung der Temperier-Gehäusewände 19, 20 verfügen über verhältnismäßig hohe Durchmessertoleranzen, während zu vergleichbaren oder kleineren Kosten Temperier-Gehäusebleche 22, 23 mit kleineren Dickentoleranzen verwendet werden können.

Ein Spannungsarmglühen kann vor dem Innenhochdruckumformen und/oder nach dem Innenhochdruckumformen erfolgen.

Auf die Temperier-Innengehäusewand 19 und die Temperier-Außengehäusewand 20 wird zur Vereinfachung in dem vorliegenden Anmeldungstext teilweise gemeinsam durch Verwendung der verkürzten Bezeichnung "Temperier-Gehäusewände" Bezug genommen. Entsprechend wird gemeinsam auf das Temperier-Innengehäuseblech 22 und das Temperier-Außengehäuseblech 23 durch Verwendung der verkürzten Bezeichnung "Temperier-Gehäusebleche" Bezug genommen.

Für die Herstellung der Verschweißungen (insbesondere der Schweißverbindungen 25 und/oder der Verschweißungen 44 und/oder der Verschweißungen mit den Flanschen 47, 48) kann im Rahmen der Erfindung eine beliebige Technologie (insbesondere Schmelzschweißverfahren, WIG, MIG, MAG, TIG oder Plasmaschweißen) Einsatz finden.

**BEZUGSZEICHENLISTE**

| | |
|---|---|
| 1 | Temperiereinrichtung |
| 2 | Stator |
| 3 | Rotor |
| 4 | Innenrohr |
| 5 | Ring |
| 6 | Ring |
| 7 | Außenrohr |
| 8 | Innenraum |
| 9 | Temperierraum |
| 10 | Bearbeitungsstrecke |
| 11 | Wendel |
| 12 | Durchgangsraum |
| 13 | Motor |
| 14 | Ablöseelement |
| 15 | Drehachse |
| 16 | Ziehdorn |
| 17 | Innenraum |
| 18 | Temperiergehäuse |
| 19 | Temperier-Innengehäusewand |
| 20 | Temperier-Außengehäusewand |
| 21 | Arbeitsfläche |
| 22 | Temperier-Innengehäuseblech |
| 23 | Temperier-Außengehäuseblech |
| 24 | Rand |
| 25 | Schweißverbindung |
| 26 | Laser |
| 27 | Spannbalken |
| 28 | Spannbalken |
| 29 | Schweißring |
| 30 | Temperiergehäuseplatte |
| 31 | Stirnseite |
| 32 | Stirnseite |
| 33 | Schlitz |
| 34 | 4-Walzen-Biegemaschine |
| 35 | Walze |
| 36 | Zylindersegment |
| 37 | Walze |
| 38 | Walze |
| 39 | Walze |
| 40 | Laser |
| 41 | Elektrode, Abstützelement und/oder Führungselement |
| 42 | Elektrode, Abstützelement und/oder Führungselement |
| 43 | Formelement |
| 44 | Verschweißung |
| 45 | Stirnseite |
| 46 | Stirnseite |
| 47 | Flansch |
| 48 | Flansch |
| 49 | Ringflansch |
| 50 | Ringflansch |
| 51 | Laser |

**Patentansprüche**

1. Temperiereinrichtung (1) für ein kontinuierliches Temperieren einer Masse mit

a) einem Stator (2) und einem gegenüber dem Stator (2) verdrehbaren Rotor (3), wobei in einem von dem Stator (2) begrenzten Innenraum (17) die Masse angeordnet werden kann, die durch die relative Verdrehung des Rotors (3) gefördert, geformt und/oder durchmischt werden kann, und

b) einem von dem Stator (2) ausgebildeten Temperiergehäuse (18), welches eine Temperier-Innengehäusewand (19) und eine Temperier-Außengehäusewand (20) aufweist, zwischen denen ein von einem Temperierfluid durchströmter Temperierraum (9) ausgebildet ist,

c) wobei die Temperier-Innengehäusewand (19) oder die Temperier-Außengehäusewand (20) eine Arbeitsfläche (21) ausbildet, welche mit der Masse zur Temperierung der Masse in Kontakt kommt und mit dem Rotor (3) zur Ablösung der Masse in Wechselwirkung tritt, **dadurch gekennzeichnet, dass**

d) die Temperier-Innengehäusewand (19) und die Temperier-Außengehäusewand (20) in aneinander anliegendem Zustand über mehrere Schweißverbindungen (25) miteinander verbunden sind und

e) der Temperierraum (9) des Temperiergehäuses (18) durch eine plastische Verformung der Temperier-Innengehäusewand (19) und/oder der Temperier-Außengehäusewand (20) zwischen den Schweißverbindungen (25) mittels Innenhochdruckumformens hergestellt ist, wobei die Arbeitsfläche (21) von der beim Innenhochdruckumformen beaufschlagten Temperier-Innengehäusewand (19) oder Temperier-Außengehäusewand (20) bereitgestellt ist und der Radius der Arbeitsfläche (21) in einem Bereich, in dem die Arbeitsfläche (21) mit dem Rotor (3) in Wechselwirkung tritt, um weniger als +/- 1 mm variiert.

2. Temperiereinrichtung (1) nach Anspruch 1, **dadurch gekennzeichnet, dass** die Temperier-Innengehäusewand (19) als Temperier-Innengehäuseblech (22) und die Temperier-Außengehäusewand (20) als Temperier-Außengehäuseblech (23) ausgebildet sind, die in ebenem Zustand aneinander anliegend über Schweißverbindungen (25) miteinander verschweißt sind und in dem verschweißten Zustand mittels eines Biegevorgangs zu einem Zylindersegment (36) gebogen sind.

3. Temperiereinrichtung (1) nach Anspruch 2, **dadurch gekennzeichnet, dass** aneinander angrenzende Stirnseiten (31, 32) mindestens eines Zylindersegments über eine Verschweißung (44) miteinander verschweißt sind.

4. Temperiereinrichtung (1) nach Anspruch 3, **dadurch**

**gekennzeichnet, dass** eine Nachbearbeitung der Verschweißung (44) der Stirnseiten (31, 32) erfolgt.

5. Temperiereinrichtung (1) nach einem der vorhergehenden Ansprüche, **dadurch gekennzeichnet, dass** die Temperier-Innengehäusewand (19) und/oder der Temperier-Außengehäusewand (20) nach dem Innenhochdruckumformen mittels einer spanenden, schleifenden und/oder biegenden Materialbearbeitung im Bereich der Arbeitsfläche (21) nachbearbeitet ist.

6. Temperiereinrichtung (1) nach einem der vorhergehenden Ansprüche, **dadurch gekennzeichnet, dass**

   a) für den Fall, dass das Temperier-Innengehäuseblech (22) die Arbeitsfläche (21) ausbildet, das Temperier-Innengehäuseblech (22) infolge des Innenhochdruckumformens

   - in einem kleineren Ausmaß plastisch verformt ist als das Temperier-Außengehäuseblech (23)
   - oder überhaupt nicht plastisch

   verformt ist,
   wobei vorzugsweise das Temperier-Außengehäuseblech (23) und das Temperier-Innengehäuseblech (22) aus denselben Materialien bestehen, das Temperier-Innengehäuseblech (22) eine Dicke von mindestens 2,5 mm aufweist und das Temperier-Außengehäuseblech (23) eine Dicke von weniger als 2 mm aufweist,
   b) für den Fall, dass das Temperier-Außengehäuseblech (23) die Arbeitsfläche (21) ausbildet, das Temperier-Außengehäuseblech (23) infolge des Innenhochdruckumformens

   - in einem kleineren Ausmaß plastisch verformt ist als das Temperier-Innengehäuseblech (22)
   - oder überhaupt nicht plastisch

   verformt ist,
   wobei vorzugsweise das Temperier-Außengehäuseblech (23) und das Temperier-Innengehäuseblech (22) aus denselben Materialien bestehen, das Temperier-Außengehäuseblech (23) eine Dicke von mindestens 2,5 mm aufweist und das Temperier-Innengehäuseblech (22) eine Dicke im Bereich von weniger als 2 mm aufweist oder

   wobei vorzugsweise das Temperier-Außengehäuseblech (23) und das Temperier-Innengehäuseblech (22) aus denselben Materialien bestehen und die Dicken des Temperier-Innengehäusebleches (22) und des Temperier-Außengehäusebleches (23) um einen Faktor von mindestens 2 voneinander abweichen.

7. Temperiereinrichtung (1) nach einem der vorhergehenden Ansprüche, **dadurch gekennzeichnet, dass** die Schweißverbindungen (25) zwischen der Temperier-Innengehäusewand (19) und der Temperier-Außengehäusewand (20) als Schweißringe (29) ausgebildet sind.

8. Temperiereinrichtung (1) nach einem der vorhergehenden Ansprüche, **dadurch gekennzeichnet, dass** mindestens eine axiale Stirnseite (45, 46) des Temperier-Innengehäusewand (19) und/oder der Temperier-Außengehäusewand (20) mit einem Flansch (47, 48) verschweißt ist.

9. Verwendung

   a) eines Innenhochdruckumformens
   b) für die Herstellung eines Temperierraums (9) eines Temperiergehäuses (18) für eine Temperiereinrichtung (1) nach einem der vorhergehenden Ansprüche.

10. Verfahren zur Herstellung eines Temperiergehäuses (18) für eine Temperiereinrichtung (1) nach einem der Ansprüche 1 bis 7, mit folgenden Verfahrensschritten:

    a) Bereitstellen des Temperier-Innengehäusebleches (22),
    b) Bereitstellen des Temperier-Außengehäusebleches (23),
    c) Verschweißen des Temperier-Innengehäusebleches (22) und des Temperier-Außengehäusebleches (23) mittels Schweißverbindungen (25) miteinander, womit eine Temperiergehäuseplatte (30) gebildet ist,
    d) Biegen der Temperiergehäuseplatte (30) zu einem Zylindersegment (36),
    e) Erzeugung einer Verschweißung (44) der aneinander angrenzenden Stirnseiten (31, 32) der gebogenen Temperiergehäuseplatte (30) miteinander,
    f) Herstellen eines zwischen dem Temperier-Innengehäuseblech (22) und dem Temperier-Außengehäuseblech (23) ausgebildeten Temperierraums (9) durch eine plastische Verformung mittels Innenhochdruckumformens.

11. Verfahren nach Anspruch 10, **dadurch gekennzeichnet, dass** das Bereitstellen mit einem Zuschneiden mittels eines Lasers erfolgt.

12. Verfahren nach Anspruch 10 oder 11, **dadurch gekennzeichnet, dass** ein Biegen mittels einer 4-Walzen-Biegemaschine (34) erfolgt.

**13.** Verfahren nach einem der Ansprüche 10 bis 12, **dadurch gekennzeichnet, dass** eine Nachbearbeitung der Verschweißung (44) erfolgt.

**14.** Verfahren nach einem der Ansprüche 10 bis 13, **dadurch gekennzeichnet, dass** eine Stirnseite des Temperier-Außengehäusebleches (23) und/oder eine Stirnseite (45, 46) des Temperier-Innengehäusebleches (22) mit einem Flansch (47, 48) verschweißt wird.

**15.** Verfahren nach einem der Ansprüche 10 bis 14, **dadurch gekennzeichnet, dass** ein Spannungsarmglühen erfolgt.

**Claims**

**1.** Tempering device (1) for continuously tempering a mass, comprising

a) a stator (2) and a rotor (3) which is rotatable relative to the stator (2), wherein the mass can be arranged in an interior space (17) limited by the stator (2), the mass being conveyable, formed or shaped and/or mixed by the relative rotation of the rotor (3), and
b) a tempering housing (18) formed by the stator (2), which comprises a tempering inner housing wall (19) and a tempering outer housing wall (20), between which a tempering chamber (9) is formed through which a tempering fluid flows,
c) wherein the tempering inner housing wall (19) or the tempering outer housing wall (20) forms a working surface (21) which comes into contact with the mass for tempering the mass and interacts with the rotor (3) for detaching the mass, **characterized in that**
d) the tempering inner housing wall (19) and the tempering outer housing wall (20) are connected to one another in a state in which they lie against one another via a plurality of welded connections (25), and
e) the tempering chamber (9) of the tempering housing (18) is produced by a plastic deformation of the tempering inner housing wall (19) and/or the tempering outer housing wall (20) between the welded connections (25) by means of internal high-pressure deformation, wherein the working surface (21) is provided by the tempering inner housing wall (19) or tempering outer housing wall (20) subjected to the internal high-pressure deformation, and the radius of the working surface (21) varies by less than +/- 1 mm in a region in which the working surface (21) interacts with the rotor (3).

**2.** Tempering device (1) according to claim 1, **charac-**
terized in that the tempering inner housing wall (19) is formed as a tempering inner housing sheet (22) and the tempering outer housing wall (20) is formed as a tempering outer housing sheet (23), which in a flat state lie against one another and are welded to one another via welded connections (25) and in the welded state are bent by means of a bending process into a cylinder segment (36).

**3.** Tempering device (1) according to claim 2, **characterized in that** adjoining end faces (31, 32) of at least one cylinder segment are welded to one another by means of a weld (44).

**4.** Tempering device (1) according to claim 3, **characterized in that** post-processing of the weld (44) of the end faces (31, 32) is carried out.

**5.** Tempering device (1) according to one of the preceding claims, **characterized in that** the tempering inner housing wall (19) and/or the tempering outer housing wall (20) is post-processed in the region of the working surface (21) after the internal high-pressure deformation by means of a machining, grinding and/or bending material processing.

**6.** Tempering device (1) according to one of the preceding claims, **characterized in that**

a) in the case that the tempering inner housing sheet (22) forms the working surface (21), the tempering inner housing sheet (22) as a result of the internal high-pressure deformation

- is plastically deformed to a smaller extent than the tempering outer housing sheet (23), or
- is not plastically deformed at all,

wherein preferably the tempering outer housing sheet (23) and the tempering inner housing sheet (22) consist of the same materials, the tempering inner housing sheet (22) has a thickness of at least 2.5 mm and the tempering outer housing sheet (23) has a thickness of less than 2 mm,
b) in the case that the tempering outer housing sheet (23) forms the working surface (21), the tempering outer housing sheet (23) as a result of the internal high-pressure deformation

- is plastically deformed to a smaller extent than the tempering inner housing sheet (22), or
- is not plastically deformed at all,

wherein preferably the tempering outer housing sheet (23) and the tempering inner housing sheet (22) consist of the same materials, the tempering outer housing sheet (23) has a thickness of at least 2.5 mm and the tempering inner housing sheet (22) has a thickness in the range of less than 2 mm, or

wherein preferably the tempering outer housing sheet (23) and the tempering inner housing sheet (22) consist of the same materials and the thicknesses of the tempering inner housing sheet (22) and the tempering outer housing sheet (23) differ from one another by a factor of at least 2.

7. Tempering device (1) according to one of the preceding claims, **characterized in that** the welded connections (25) between the tempering inner housing wall (19) and the tempering outer housing wall (20) are embodied as welding rings (29).

8. Tempering device (1) according to one of the preceding claims, **characterized in that** at least one axial end face (45, 46) of the tempering inner housing wall (19) and/or of the tempering outer housing wall (20) is welded to a flange (47, 48).

9. Use

a) of an internal high-pressure deformation process
b) for producing a tempering chamber (9) of a tempering housing (18) for a tempering device (1) according to one of the preceding claims.

10. Method for producing a tempering housing (18) for a tempering device (1) according to one of claims 1 to 7, the method comprising the following method steps:

a) providing the tempering inner housing sheet (22),
b) providing the tempering outer housing sheet (23),
c) welding the tempering inner housing sheet (22) and the tempering outer housing sheet (23) together by means of welded connections (25), thereby forming a tempering housing plate (30),
d) bending the tempering housing plate (30) into a cylinder segment (36),
e) producing a weld (44) of the adjoining end faces (31, 32) of the bent tempering housing plate (30),
f) producing a tempering chamber (9) formed between the tempering inner housing sheet (22) and the tempering outer housing sheet (23) by plastic deformation by means of internal high-pressure deformation.

11. Method according to claim 10, **characterized in that** the providing is carried out with cutting by means of a laser.

12. Method according to claim 10 or 11, **characterized in that** bending is carried out by means of a 4-roll bending machine (34).

13. Method according to one of claims 10 to 12, **characterized in that** post-processing of the weld (44) is carried out.

14. Method according to one of claims 10 to 13, **characterized in that** an end face of the tempering outer housing sheet (23) and/or an end face (45, 46) of the tempering inner housing sheet (22) is welded to a flange (47, 48).

15. Method according to one of claims 10 to 14, **characterized in that** stress-relief annealing is carried out.

## Revendications

1. Dispositif de tempérage (1) pour un tempérage continu d'une masse comprenant

a) un stator (2) et un rotor (3) pouvant être tourné par rapport au stator (2), dans un espace intérieur (17) délimité par le stator (2), la masse pouvant être disposée, laquelle peut être transportée, formée et/ou mélangée par la rotation relative du rotor (3), et
b) un boîtier de tempérage (18) formé par le stator (2), lequel comprend une paroi interne du boîtier de tempérage (19) et une paroi externe du boîtier de tempérage (20), entre lesquelles est formé un espace de tempérage (9) traversé par un fluide de tempérage,
c) la paroi interne du boîtier de tempérage (19) ou la paroi externe du boîtier de tempérage (20) formant une surface de travail (21) qui entre en contact avec la masse pour le tempérage de la masse et interagit avec le rotor (3) pour le détachement de la masse,
**caractérisé en ce que**
d) la paroi interne du boîtier de tempérage (19) et la paroi externe du boîtier de tempérage (20) sont reliées l'une à l'autre à l'état accolé par plusieurs liaisons soudées (25) et
e) l'espace de tempérage (9) du boîtier de tempérage (18) est formé par une déformation plastique de la paroi interne du boîtier de tempérage (19) et/ou de la paroi externe du boîtier de tempérage (20) entre les liaisons soudées (25) au moyen d'un formage par hydroformage interne, la surface de travail (21) étant fournie par la paroi interne du boîtier de tempérage (19) ou la paroi externe du boîtier de tempérage (20) soumise au formage par hydroformage interne, et le rayon de la surface de travail (21), dans une zone où la surface de travail (21) interagit avec le rotor (3), varie de moins de +/- 1 mm.

2. Dispositif de tempérage (1) selon la revendication 1, **caractérisé en ce que** la paroi interne du boîtier de tempérage (19) est réalisée comme tôle interne du boîtier de tempérage (22) et la paroi externe du boîtier de tempérage (20) comme tôle externe du boîtier de tempérage (23), qui, à l'état plat, sont accolées l'une à l'autre et soudées ensemble par des liaisons soudées (25) et, à l'état soudé, sont cintrées au moyen d'une opération de cintrage pour former un segment cylindrique (36).

3. Dispositif de tempérage (1) selon la revendication 2, **caractérisé en ce que** des faces frontales (31, 32) adjacentes d'au moins un segment cylindrique sont soudées ensemble par une soudure (44).

4. Dispositif de tempérage (1) selon la revendication 3, **caractérisé en ce qu'**une retouche de la soudure (44) des faces frontales (31, 32) est effectuée.

5. Dispositif de tempérage (1) selon l'une quelconque des revendications précédentes, **caractérisé en ce que** la paroi interne du boîtier de tempérage (19) et/ou la paroi externe du boîtier de tempérage (20), après le formage par hydroformage interne, est retouchée dans la zone de la surface de travail (21) au moyen d'un usinage par enlèvement de matière, d'un meulage et/ou d'un cintrage.

6. Dispositif de tempérage (1) selon l'une quelconque des revendications précédentes, **caractérisé en ce que**

   a) dans le cas où la tôle interne du boîtier de tempérage (22) forme la surface de travail (21), la tôle interne du boîtier de tempérage (22) est, suite au formage par hydroformage interne,

   - plastiquement déformée dans une moindre mesure que la tôle externe du boîtier de tempérage (23)
   - ou n'est pas du tout plastiquement déformée,

   de préférence,
   la tôle externe du boîtier de tempérage (23) et la tôle interne du boîtier de tempérage (22) étant constituées des mêmes matériaux, la tôle interne du boîtier de tempérage (22) ayant une épaisseur d'au moins 2,5 mm et la tôle externe du boîtier de tempérage (23) ayant une épaisseur de moins de 2 mm,

   b) dans le cas où la tôle externe du boîtier de tempérage (23) forme la surface de travail (21), la tôle externe du boîtier de tempérage (23) est, suite au formage par hydroformage interne,

   - plastiquement déformée dans une moindre mesure que la tôle interne du boîtier de tempérage (22)
   - ou n'est pas du tout plastiquement déformée,

   de préférence,
   la tôle externe du boîtier de tempérage (23) et la tôle interne du boîtier de tempérage (22) étant constituées des mêmes matériaux, la tôle externe du boîtier de tempérage (23) ayant une épaisseur d'au moins 2,5 mm et la tôle interne du boîtier de tempérage (22) ayant une épaisseur de moins de 2 mm, ou

   de préférence, la tôle externe du boîtier de tempérage (23) et la tôle interne du boîtier de tempérage (22) étant constituées des mêmes matériaux et les épaisseurs de la tôle interne du boîtier de tempérage (22) et de la tôle externe du boîtier de tempérage (23) différant d'un facteur d'au moins 2.

7. Dispositif de tempérage (1) selon l'une quelconque des revendications précédentes, **caractérisé en ce que** les liaisons soudées (25) entre la paroi interne du boîtier de tempérage (19) et la paroi externe du boîtier de tempérage (20) sont réalisées sous forme d'anneaux de soudure (29).

8. Dispositif de tempérage (1) selon l'une quelconque des revendications précédentes, **caractérisé en ce qu'**au moins une face frontale axiale (45, 46) de la paroi interne du boîtier de tempérage (19) et/ou de la paroi externe du boîtier de tempérage (20) est soudée à une bride (47, 48).

9. Utilisation

   a) d'un formage par hydroformage interne
   b) pour la fabrication d'un espace de tempérage (9) d'un boîtier de tempérage (18) pour un dispositif de tempérage (1) selon l'une quelconque des revendications précédentes.

10. Procédé de fabrication d'un boîtier de tempérage (18) pour un dispositif de tempérage (1) selon l'une des revendications 1 à 7, comprenant les étapes suivantes :

    a) mise à disposition de la tôle interne du boîtier de tempérage (22),
    b) mise à disposition de la tôle externe du boîtier de tempérage (23),

c) soudage de la tôle interne du boîtier de tempérage (22) et de la tôle externe du boîtier de tempérage (23) l'une à l'autre au moyen de liaisons soudées (25), formant ainsi une plaque de boîtier de tempérage (30),
d) cintrage de la plaque de boîtier de tempérage (30) pour former un segment cylindrique (36),
e) réalisation d'une soudure (44) des faces frontales (31, 32) adjacentes de la plaque de boîtier de tempérage (30) cintrée,
f) formation d'un espace de tempérage (9) formé entre la tôle interne du boîtier de tempérage (22) et la tôle externe du boîtier de tempérage (23) par une déformation plastique au moyen d'un formage par hydroformage interne.

11. Procédé selon la revendication 10, **caractérisé en ce que** la mise à disposition est réalisée par une découpe au moyen d'un laser.

12. Procédé selon la revendication 10 ou 11, **caractérisé en ce qu'**un cintrage est réalisé au moyen d'une cintreuse à 4 rouleaux (34).

13. Procédé selon l'une des revendications 10 à 12, **caractérisé en ce qu'**une retouche de la soudure (44) est effectuée.

14. Procédé selon l'une des revendications 10 à 13, **caractérisé en ce qu'**une face frontale de la tôle externe du boîtier de tempérage (23) et/ou une face frontale (45, 46) de la tôle interne du boîtier de tempérage (22) est soudée à une bride (47, 48).

15. Procédé selon l'une des revendications 10 à 14, **caractérisé en ce qu'**un recuit de détente est effectué.

**Fig. 1**
**(Stand der Technik)**

20,23

21

19,22

## Fig. 2

24

20,23

21

19,22

## Fig. 3

27

28

25f,29f

30

26

25c,29c

25b,29b

25a,29a

20,23

19,22

24

21

**Fig. 4**

27     26     28     20,23   19,22

30

24

21

**Fig. 5**

30

25a,29a

19,22

21

20,23

24

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006043338 B4
- EP 2111762 B1
- DE 102016122603 A1
- WO 9958920 A1
- EP 3222148 A1
- EP 2111762 B2

**In der Beschreibung aufgeführte Nicht-Patentliteratur**

- **OFFERMANNS HERIBERT**. Gut temperiert. *cav Achema Guide 2009*, 06 May 2009, 1-3, https://lob-gmbh.de/wp-content/uploads/2020/03/CAV-Achema-Guide2009.pdf
- Chemische Prozesse-Verbundprojekt: Innovative Apparate- und Anlagenkonzepte zur Steigerung der Effizienz von Produktionsprozessen (InnovA). *Förderkennzeichen 033RC 1013 A*, 20110101, https://lob-gmbh.de/produkte/; www.omegathermoproducts.nl/de/produkte/lasergeschweisste-tank-komponenten/lasergeschweisster-tankmantel